Europäisches Patentamt

European Patent Office

Office européen des brevets

(19)

(11) Numéro de publication : **0 440 534 A1**

## (12) DEMANDE DE BREVET EUROPEEN

(21) Numéro de dépôt : **91400178.9**

(22) Date de dépôt : **28.01.91**

(51) Int. Cl.$^5$ : **H02P 6/02**

(30) Priorité : **31.01.90 FR 9001115**

(43) Date de publication de la demande :
**07.08.91 Bulletin 91/32**

(84) Etats contractants désignés :
**DE ES GB IT**

(71) Demandeur : **VALEO THERMIQUE HABITACLE
8, rue Louis-Lormand, La Verriere
F-78320 Le Mesnil-Saint-Denis (FR)**

(72) Inventeur : **Jakubowicz, Alain
3, Place de la Croix
F-78120 Clairefontaine (FR)**

(74) Mandataire : **Gamonal, Didier
Société VALEO Service Propriété Industrielle
21, rue Blanqui
F-93406 Saint Ouen (FR)**

(54) **Dispositif de contrôle du courant pour moteur à commutation électronique et structure électromécanique comportant un tel dispositif.**

(57)    L'invention concerne un dispositif de contrôle du courant pour moteur à commutation électronique. Elle trouve application notamment dans le domaine de l'électricité automobile.

On minimise les oscillations du couple moteur induites par les commutations électroniques sur les enroulements du moteur (17) en mesurant en permanence le courant de sortie débité par la batterie que l'on compare à une source de référence, le signal de la comparaison contrôlant les commutations du hacheur (2).

fig.1

EP 0 440 534 A1

## DISPOSITIF DE CONTROLE DU COURANT POUR MOTEUR A COMMUTATION ELECTRONIQUE ET STRUCTURE ELECTROMECANIQUE COMPORTANT UN TEL DISPOSITIF

La présente invention concerne un dispositif de contrôle du courant pour moteur à commutation électronique. Elle concerne aussi une structure électromécanique comme une installation de ventilation de l'habitacle d'un véhicule.

Dans les moteurs à commutation électronique, une alimentation en courant continu est connectée aux différents enroulements du moteur par le moyen d'un circuit de commande bien connu en lui-même. En particulier, le pied de chaque enroulement est connecté à un pôle d'alimentation par l'intermédiaire d'un élément de commutation. Un circuit d'activation permet de connecter une tension variable provenant d'un hacheur et d'un onduleur à chaque phase ou enroulement du moteur concerné.

Ces diverses commutations au cours du temps entraînent des variations dans le couple moteur qui sont amplifiées par la charge mécanique couplée sur l'axe moteur ou l'arbre moteur. Ces modifications de couple provoquent des pulsations qui se répercutent en ondes acoustiques dans l'ensemble du système mécanique sur lequel le moteur est monté. Il en résulte un niveau de bruit préjudiciable au développement des techniques mettant en oeuvre des moteurs à commutation électronique.

C'est un but de la présente invention de minimiser les pulsations de couple moteur dans le fonctionnement des moteurs à commutation électronique.

En particulier, dans le domaine de l'électronique automobile, on cherche à fournir des moteurs ou des systèmes de motorisation notamment pour les ventilateurs de chauffage et/ou de climatisation dont le niveau de bruit est limité au minimum. De grands efforts sont faits sur le choix des matériaux et sur les formes que prennent ces matériaux de façon à minimiser les bruits. Il est ainsi apparu que les bruits induits par les commutations électroniques dans les moteurs à commutation électronique utilisés dans de tels systèmes électro-mécaniques étaient responsables d'un niveau de bruit accepté jusqu'alors.

C'est un autre objet de la présente invention que de permettre l'utilisation d'un moteur à commutation électronique dans un environnement à très faible bruit sonore en particulier dans une structure électromécanique comme une installation de ventilation d'un habitacle d'automobile.

A cet effet, la présente invention concerne un dispositif de contrôle du courant pour moteur à commutation électronique du type comportant une alimentation en courant continu connectée aux bornes des enroulements du moteur par l'intermédiaire d'un circuit électronique de commande de la commutation.

L'invention se caractérise notamment en ce que le dispositif comporte un élément de mesure instantanée du courant d'alimentation continue qui fournit un signal image du couple moteur instantané à une boucle de régulation, la boucle de régulation élaborant un signal de sortie qui module une commande du circuit de commande de commutation, par exemple en modifiant le rapport cyclique d'un organe comme un hacheur destiné à moduler la tension d'alimentation fournie aux enroulements à chaque période de commutation.

D'autres caractéristiques et avantages de la présente invention seront mieux compris à l'aide de la description et des figures annexées qui sont :

- la figure 1, un schéma d'un premier mode de réalisation de la présente invention,
- la figure 2, un diagramme du courant issu de la source d'alimentation du moteur en fonctionnement,
- la figure 3, un schéma d'un second mode de réalisation de la présente invention,
- la figure 4, un diagramme du courant d'alimentation continue dans le mode de réalisation de la figure 4.

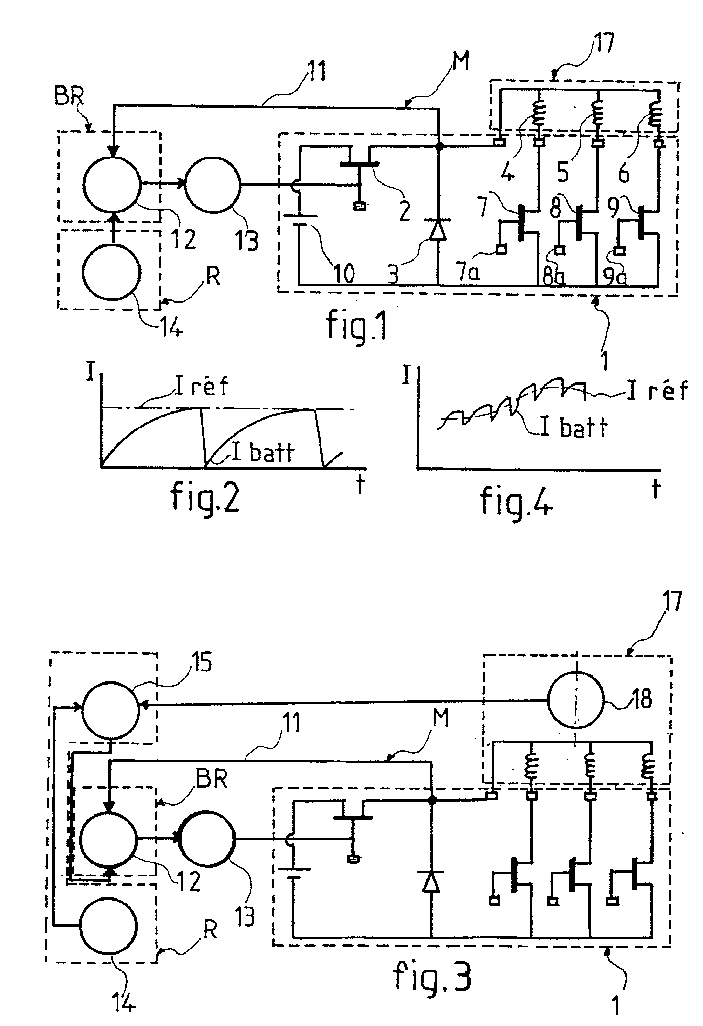

A la figure 1, on a représenté un circuit de commande de commutation 1 connecté aux enroulements d'un moteur 17 à commutation électronique. Le moteur 17 comporte trois enroulements 4, 5, 6 dont les pieds sont connectés respectivement à des transistors de commutation 7,8,9 du circuit 1. Chacun de ces transistors est ouvert à un instant déterminé par une commande 7a, 8a, 9a provenant d'un circuit de pilotage non représenté au dessin.

La tension variable fournie à chaque enroulement provient d'un circuit comportant principalement une source de courant continu 10 hâché par un hacheur constitué par un transistor de puissance 2 et par une diode de roue libre 3.

Dans l'art antérieur, on a déjà proposé des systèmes permettant d'agir sur le courant d'alimentation du hacheur. Mais ces systèmes utilisent en général un capteur disposé sur l'arbre moteur et qui asservit en fonction des variations de vitesse de l'arbre moteur. Ces dispositifs sont coûteux et ne sont généralement pas adaptables dans les applications prévues pour l'invention pour des raisons de coût.

Selon l'invention, un élément de mesure M du courant d'alimentation continue prélève le courant instantané tiré sur la source d'alimentation par le hacheur. On s'est aperçu que cette mesure était aussi une mesure du couple moteur instantané. Il est alors possible de contrôler les pulsations parasites de couple moteur (ou de commutation du couple moteur). Ici, l'élément de mesure M capte par une connexion 11 le signal de l'autre coté du chemin de commutation du transistor 2, monté en hacheur de tension. Le signal prélevé à la sortie du hacheur est fourni à une boucle de régulation BR asservie par une référence constante R. Dans le mode de réalisation de la figure 1, cette boucle de régulation reçoit le signal de mesure du courant d'alimentation de la source qui est fournie à une première entrée d'un comparateur 12. La seconde entrée du comparateur 12 reçoit un signal de référence fourni par un organe 14. Dans un mode de réalisation, cet organe 14 est constitué par un potentiomètre monté entre une tension continue prédéterminée (non représentée) et la masse électrique.

La sortie du comparateur 12 est fournie à la grille du transistor de puissance 2 par l'intermédiaire d'un circuit correcteur 13. D'une manière générale, la boucle de régulation, asservie à une référence constante fournit une commande optimisée à l'élément de variation de la tension d'alimentation fournie au moteur. De cette façon, la mesure du courant par l'élément M près de la cathode de la diode 3 est une image fidèle du couple instantané délivré sur l'axe moteur, et pour supprimer les vibrations induites par les variations du couple, le courant tiré sur la source continue 10 est aussi constant que possible à l'échelle des périodes de commutation.

Sur une période de commutation, il faut donc que l'organe 14 fournisse un signal de référence stable.

Dans un mode de réalisation, le circuit de correction 13 est constitué par un amplificateur opérationnel. Le gain de cet amplificateur est fixé en fonction de la gamme de puissance délivrée par le moteur 17.

Dans un autre mode de réalisation, le circuit de correction 13 comporte en plus un terme intégral destiné à lisser les variations du signal prélevé par l'élément de mesure M.

A la figure 2, on a représenté les variations du courant $I_{batt}$ débité par la source d'alimentation 10. Quand le courant qui traverse l'organe 2 augmente et qu'il atteint la valeur $I_{ref}$ le comparateur 12 émet un signal convenablement traité par le circuit 13, qui module le rapport cyclique du hacheur 2. De ce fait, les oscillations qui commenceraient à apparaître à cause des commutations sur le couple moteur ne peuvent plus se développer.

Dans un autre mode de réalisation représenté à la figure 3, on a ajouté au contrôle représenté à la figure 1 un asservissement de vitesse qui permet d'adapter la correction de l'invention en fonction de la vitesse du moteur. En effet, selon la charge, les oscillations de couple moteur peuvent varier avec la vitesse de rotation du moteur.

A cette fin, la référence R comporte en plus du potentiomètre 14 décrit à la figure 1, un second comparateur 15 dont une première entrée est connectée à un potentiomètre 14 et une seconde entrée est connectée à un organe 18 de mesure de la vitesse du moteur. Ce dispositif envoie un signal qui est fourni à la seconde entrée du comparateur 15. Le reste du circuit n'est pas modifié.

A la figure 4, on a représenté un diagramme du courant issu de la source d'alimentation continue dans le cas du montage de la figure 3. Le signal de référence $I_{ref}$ sur le comparateur 12 évolue en fonction des variations de la vitesse de rotation du moteur, de ce fait, le courant débité par la source de courant 10 voit sa moyenne $I_{batt}$ varier en fonction de cette référence asservie en vitesse.

Parmi d'autres avantages de l'invention, on trouve la possibilité d'intégrer le circuit de l'invention sur un circuit intégré de puissance existant sans bouleverser les régles de dessin de ce dernier. Mais il est aussi possible de le réaliser à part sur un autre circuit intégré dans un boitier distinct, car tous les signaux échangés entre les dispositifs de commande des moteurs à commutation électronique et le circuit de l'invention sont accessibles de l'extérieur de ces dispositifs de commande.

Dans une application de l'invention à une installation de ventilation d'une automobile, l'effet du circuit de l'invention se traduit par un gain de 10 dB acoustique sur le niveau de bruit dégagé par la même installation, circuit de contrôle débranché.

L'élément de mesure de courant du mode de réalisation préféré est une simple connexion 11 à la sortie du chemin de commutation du transistor 2. Selon les caractéristiques du circuit de commande de commutation, cet élément de mesure peut aussi comporter un élément résistif ou un amplificateur. D'autre part, le point de mesure peut aussi être placé n'importe où dans la boucle d'alimentation en courant continu, notamment sur les bornes de connexion de l'alimentation continue (la batterie embarquée sur un véhicule notamment).

## Revendications

1. Dispositif de contrôle du courant pour moteur à commutation électronique du type comportant une source d'alimentation en courant continu (10) connectée aux bornes des enroulements du moteur par l'intermédiaire d'un circuit de commande de commutation, caractérisé en ce qu'il comporte un élément de mesure (M) instantanée du courant d'alimentation continue qui fournit un signal image du couple moteur instantané à une boucle de régulation (BR), la boucle de régulation élaborant un signal de sortie qui module une commande du circuit de commande de commutation, par exemple en modifiant le rapport cyclique d'un organe comme un hacheur (2) destiné à moduler la tension d'alimentation fournie aux enroulements à chaque période de commutation.

2. Dispositif selon la revendication 1, caractérisé en ce que la boucle de régulation (BR) comporte un comparateur (12) dont une première entrée reçoit le signal de mesure issu de l'élément de mesure (M), dont une seconde entrée reçoit un signal de référence d'une référence (R), et qui produit un signal de sortie appliquée à la borne de commande de commutation de l'organe (2) destiné à moduler la tension d'alimentation, de façon à limiter les oscillations parasites sur la tension d'alimentation à chaque période de commutation.

3. Dispositif selon la revendication 1, caractérisé en ce que l'élément de mesure du courant est constitué par une connexion (11) de l'autre coté du chemin de commutation d'un hacheur (2) par rapport à la source (10).

4. Dispositif selon la revendication 2, caractérisé en ce que le signal de sortie du comparateur (12) est fourni à un circuit de correction (13).

5. Dispositif selon la revendication 4, caractérisé en ce que le circuit de correction comporte un amplificateur opérationnel à gain prédéterminé.

6. Dispositif selon la revendication 4, caractérisé en ce que le circuit de correction comporte un circuit intégrateur à période prédéterminée.

7. Dispositif selon la revendication 1, caractérisé en ce que le niveau du signal de référence est asservi en fonction de la vitesse de rotation du moteur.

8. Dispositif selon la revendication 7, caractérisé en ce que l'asservissement en vitesse du signal de référence est réalisé par un comparateur (15) dont une entrée reçoit un signal issu d'un circuit (18) de mesure de la vitesse de rotation du moteur (17), et une autre entrée un signal de référence fourni par un organe (14) comme un potentiomètre.

9. Structure électromécanique dotée d'un moteur à commutation électronique, comme une installation de ventilation d'un habitacle d'automobile, caractérisée en ce qu'elle comporte un dispositif de contrôle selon l'une des revendications précédentes.

fig.1

fig.2

fig.4

fig.3

Office européen
des brevets

# RAPPORT DE RECHERCHE EUROPEENNE

Numéro de la demande

EP    91 40 0178

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3006707 (MATSUSHITA ELECTRIC IND. CO.) <br> * page 6; figure 2 * <br><br> --- | 1 | H02P6/02 |
| A | US-A-4740734 (K. TAKEUCHI ET AL) <br> * abrégé; figure 1 * <br><br> --- | 1 | |
| A | DE-A-3327761 (MATSUSHITA ELECTRIC IND. CO.) <br> * abrégé; figure 1 * <br><br> --- | 1 | |
| A | PATENT ABSTRACTS OF JAPAN <br> vol. 8, no. 25 (E-225)(1462) 02 février 1984, <br> & JP-A-58 186388 (MATSUSHITA DENKI SANGYO K.K.) <br> 31 octobre 1983, <br> * le document en entier * <br><br> --- | 1 | |
| A | US-A-4638233 (D.M. ERDMANN) <br> * abrégé * <br><br> ----- | 1, 7 | |

|  |  |
|---|---|
|  | **DOMAINES TECHNIQUES RECHERCHES (Int. Cl.5)** |
|  | H02P |

Le présent rapport a été établi pour toutes les revendications

| Lieu de la recherche | Date d'achèvement de la recherche | Examinateur |
|---|---|---|
| LA HAYE | 02 AVRIL 1991 | BEYER F. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    ...........................................................

& : membre de la même famille, document correspondant